# EUROPÄISCHE PATENTSCHRIFT

(11) **EP 4 532 116 B1**
(45) Veröffentlichungstag und Bekanntmachung des Hinweises auf die Patenterteilung: **06.05.2026**
(21) Anmeldenummer: 23709148.3
(22) Anmeldetag: 01.03.2023
(51) Int. Cl.: B04B 13/00

(54) **VERFAHREN ZUR ÜBERWACHUNG EINES ZENTRIFUGALEN SEPARATORS AUF EINE TROMMELLECKAGE**
METHOD FOR MONITORING A CENTRIFUGAL SEPARATOR FOR A DRUM LEAKAGE
PROCÉDÉ DE SURVEILLANCE D'UNE FUITE DE TAMBOUR SUR UN SÉPARATEUR CENTRIFUGE

(30) Priorität: 25.05.2022 DE 102022113295
(43) Veröffentlichungstag der Anmeldung: 09.04.2025
(73) Patentinhaber: GEA Westfalia Separator Group GmbH, 59302 Oelde (DE)
(72) Erfinder: HUNDERTMARK, Tim, 33334 Gütersloh (DE); TIPPKEMPER, Frank, 59302 Oelde (DE); GRUENDEL, Heribert, 48291 Telgte (DE); NITSCHKE, Sven, 59302 Oelde (DE)
(74) Vertreter: Specht, Peter
(86) Internationale Anmeldenummer: PCT/EP2023/055112
(87) Internationale Veröffentlichungsnummer: WO 2023/227263

(56) Entgegenhaltungen:
- WO-A1-00/53331
- WO-A1-96/03214

## Beschreibung

Die vorliegende Erfindung betrifft ein Verfahren zur Überwachung einer Trommel eines zentrifugalen Separators auf Leckage. Ein Beispiel ist aus WO9603214 bekannt.

Beim Betrieb einer Tellerzentrifuge ist eine Detektion einer Leckage, insbesondere im Bereich der sogenannten Trommelhauptdichtung von Vorteil.

Es ist wünschenswert, den Trommelinnenraum zumindest regelmäßig auf Leckagen zu überprüfen. Damit kann die verfahrenstechnische Funktion des Separators sichergestellt und die Betriebssicherheit insgesamt verbessert werden

Ausgehend von der vorgenannten Problemstellung ist es Aufgabe der vorliegenden Erfindung ein Verfahren zur Überwachung einer Trommelleckage, insbesondere im laufenden Betrieb und ggf. unter Quantifizierung des Umfangs der Leckage bereitzustellen.

Die vorliegende Erfindung löst die vorgenannte Aufgabe durch ein Verfahren mit den Merkmalen des Anspruchs 1.

Ein erfindungsgemäßes Verfahren zur Überwachung einer Trommel eines zentrifugalen Separators auf Leckage weist die folgenden Schritte auf:
- A: Bereitstellen des zentrifugalen Separators umfassend eine entleerte Trommel und Bereitstellen eines Wertes für ein Referenzvolumen der Trommel;
Die Bereitstellung kann entweder bei Inbetriebnahme erfolgen oder im laufenden Betrieb des Separators durch vorangegangene Entleerung der Trommel, sowie eine anschließende Wiederbefüllung und messtechnische Erfassung des Zulaufvolumens und des Druckes in einem Produktablauf der Trommel. In Fall der Inbetriebnahme kann das Bereitstellen des Referenzvolumens ein vorgegebener konstruktiver Wert sein, welcher für den Bautyp des Separators vom Hersteller angegeben wird. Auf Schritt A folgt sodann Schritt B.
- B: messtechnisches Erfassen eines zulaufenden Volumens zumindest bis zum Erreichen des Referenzvolumens der Trommel durch ein Messgerät;

In Schritt B wird die Trommel befüllt. Das zugelaufene Volumen, insbesondere Spülmedium, wird erfasst bis das Referenzvolumen erreicht ist. Das messtechnische Erfassen erfolgt allerdings auch über das Erreichen des Referenzvolumens hinaus, wobei nunmehr auch ein Druckanstieg sensorisch erfasst und ausgewertet wird.

Ein Spülmedium im Sinne der vorliegenden Erfindung kann eine beliebige Flüssigkeit ohne Feststoffe sein, so z.B. Verdrängungswasser oder auch eine Produktphase sein.

Erfolgt der Druckanstieg nicht genau beim Erreichen des Referenzvolumens, so kann das ermittelte Zulaufvolumen zum Zeitpunkt des Erfassens des Messwerts des Druckanstiegs erfasst werden. Aus diesem Zulaufvolumen kann ein neues Referenzvolumen für die Befüllung der Trommel ermittelt und gespeichert werden.

Erfolgt sodann beispielsweise ein weitergehender Druckanstieg bis zu einem Einstellen eines konstanten Überdrucks am Auslass bei gleichbleibender Zulaufmenge, so ist dies ein Zeichen der Dichtigkeit der Trommel. Wird kein Druckanstieg am Produktauslass einer ablaufenden Phase bei Erreichen des Referenzvolumens detektiert oder wenn ein Druckanstieg nach dem Zeitpunkt der Detektion des Erreichens des Referenzvolumens ermittelt wird, so läuft das Volumen an anderer Stelle aus der Trommel. Anders ausgedrückt, wenn der Druckanstieg trotz Erreichen des Referenzvolumens erst später beobachtet wird, so ist die Trommel undicht.
- C: messtechnisches Erfassen eines Drucks durch einen Drucksensor im Ablauf einer Phase
- D: Auswerten der zeitlichen Abfolge der Messwerte des Drucks nach Erreichen des Referenzvolumens unter Ermittlung eines Druckanstiegs
und
- E: Ausgabe eines Signals, sofern der der ermittelte Druckanstieg außerhalb eines Zeitintervalls nach Erreichen des Referenzvolumens liegt.

Wie sich aus der vorgenannten Schilderung ergibt, können einzelne Schritte zeitgleich zu den jeweiligen Folgeschritten erfolgen oder unmittelbar in die Folgeschritte übergehen.

Vorteilhafte Ausgestaltungen des Verfahrens sind Gegenstand der Unteransprüche.

Das Bereitstellen des Wertes für ein Referenzvolumen der Trommel, vorzugsweise bei Inbetriebnahme des Separators, kann durch die nachfolgenden Schritte erfolgen:
I. Bereitstellen eines zentrifugalen Separators mit einem vordefinierten Referenzvolumens in Abhängigkeit von seinen geometrischen Abmessungen;
II. Befüllung der Trommel und Bestimmung des zur Befüllung der Trommel notwendigen Volumens einer Flüssigkeit, welches dem aktuell-vorhandenen freien Trommelvolumen der Trommel entspricht, bis zum Erreichen eines Grenzstands.

Der Grenzstand kann z.B. durch einen Drucksensor oder einen Grenzstandschalter ermittelt werden. Entsprechende Schalter sind aus der Prozess- und Messtechnik bekannt. Es können z.B. vibronische Schalter oder kapazitive Schalter sein. Der Drucksensor ist allerdings bevorzugt, da dieser zugleich für Bestimmung des freien Trommelvolumens, u.a. als angepasstes Referenzvolumen, genutzt werden kann oder auch zu einer Quantifizierung des Umfangs der Leckage.

Der Drucksensor und/oder der Grenzstandschalter kann insbesondere am Ablauf der schwereren Flüssigphase oder der geklärten Phase des Separators angeordnet sein.

Die zur Befüllung der Trommel eingeleitete Flüssigkeit ist vorzugsweise Spülmedium, wobei ein Spülmediumzulauf des Separators zur Befüllung der Trommel und ein Produktzulauf des Separators in ein gemeinsames Zulaufrohr münden.

Die Bestimmung des zur Befüllung der Trommel notwendigen Volumens kann vorteilhaft durch ein Durchflussmessgerät erfolgen. Für leitfähige Medien, wie Wasser, bietet sich besonders bevorzugt ein magnetisch-induktives Durchflussmessgerät an.

Das Durchflussmessgerät kann im oder am Produktzulauf des Separators und/oder besonders bevorzugt im oder am Spülmediumzulauf angeordnet sein.

Wird gemäß Schritt E ein Signal erzeugt, so erzeugt das Signal eine Ausgabe an einer Ausgabeeinheit, vorzugsweise eine Warnung. Alternativ oder zusätzlich kann eine unmittelbare Aktion auf den Betrieb des Separators vorgenommen werden, insbesondere eine Entleerung und/oder ein Abfahren des Separators einleitet werden, um weiteren Produktverlust durch Leckage zu verhindern und um die Trommel vor Verscheiß zu schützen.

Die Schritte A-E können zumindest zweimal, insbesondere in regelmäßigen Abständen, wiederholt werden, wobei in Schritt B eine Befüllung nach einer Entleerung der Trommel erfolgen kann.

Zumindest das Durchführen der Schritte B-E und vorzugsweise des gesamten Verfahrens sollte bei rotierender Trommel erfolgen.

Ein weiterer Vorteil des Verfahrens ist, dass die Messung online während des Prozesses ohne Demontage erfolgen kann.

Weitere Vorteile, Merkmale und Einzelheiten der Erfindung ergeben sich aus der nachfolgenden Beschreibung, in der ein Ausführungsbeispiel der Erfindung anhand der beiliegenden Zeichnungen näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Insbesondere gibt es eine Vielzahl von Möglichkeiten, diese im Rahmen der vorliegenden Erfindung abzuwandeln und weiterzubilden. Es zeigen:
- Fig. 1: eine perspektivische Darstellung eines erfindungsgemäßen Separators;
- Fig. 2: eine Schnittansicht des erfindungsgemäßen Separators zur Ausführung des erfindungsgemäßen Verfahrens; und
- Fig. 3: eine schematische Darstellung des erfindungsgemäßen Verfahrensablaufs.

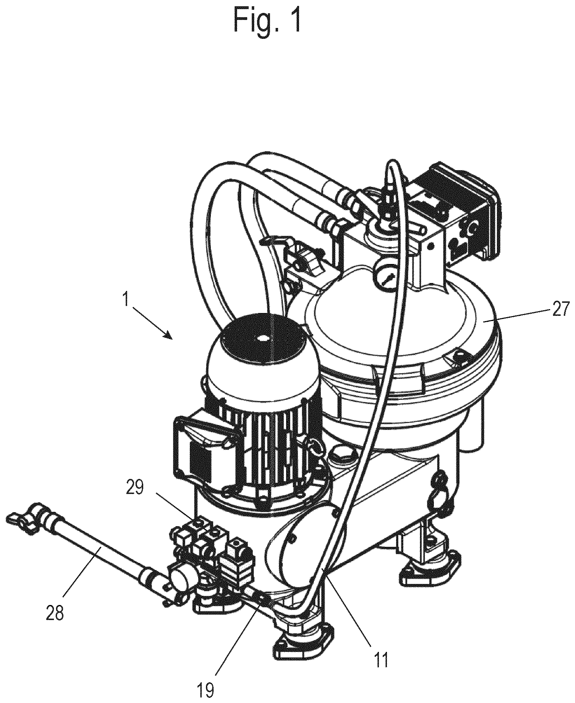

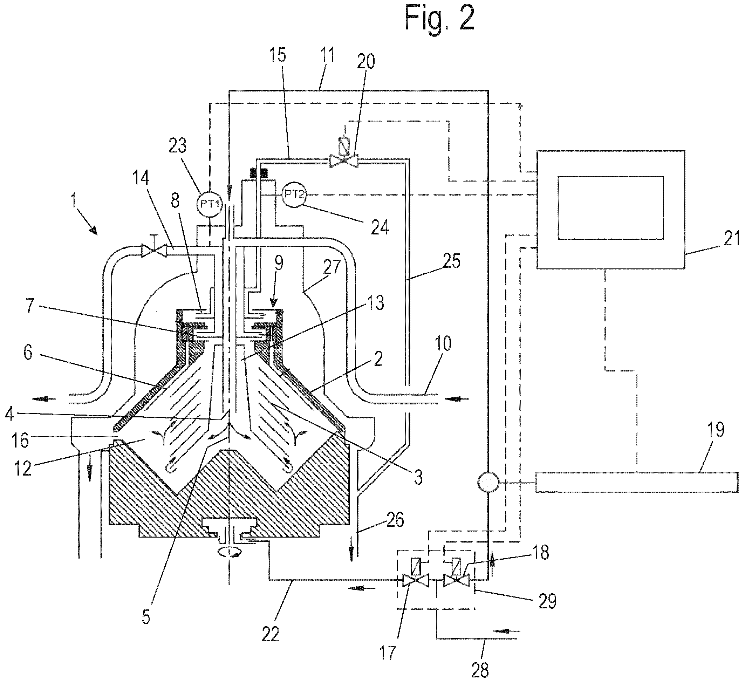

Das in den Fig. 1 und 2 dargestellte Ausführungsbeispiel zeigt einen Separator 1 mit einer rotierbar gelagerten Trommel 2, welche ein technisches Trommelvolumen als vorgegebenes Referenzvolumen aufweist.

Dieses Trommelvolumen wird aus der Dimension des Innenvolumens 12 der Trommel 2, sowie im Innenvolumen 12 angeordnete Aufbauten, wie die Dimension und die Anzahl von Tellern eines Tellerpakets 3 und deren Abstand zueinander. Weiterhin geht in die Größe des technische Trommelvolumens u.a. die Ausgestaltung eines oder mehrere Zulaufbereiche 4, Verteilerbereiche 5, Scheideteller 6, Schälkammern 7, Schälscheiben 8, Ableitungsbereiche 9 und dergleichen ein. Die vorgenannte Aufzählung ist keinesfalls abschließend. So können je nach bauartbedingter Ausgestaltung auch einzelne vorher aufgezählte Aufbauten entfallen oder durch andere Aufbauten ersetzt werden, ohne dass sich das nachfolgend beschriebene Gesamtprinzip ändert.

Der Separator 1 weist zudem einen Produktzulauf 10 und einen Spülmediumzulauf 11 auf, welche in ein gemeinsames Zulaufrohr 13 münden, welches seinerseits zumindest teilweise einen Teil eines Zulaufbereichs 4 im Innenvolumen 12 der Trommel 2 bildet.

Weiterhin weist der Separator 1 einen ersten Ablauf 14 für eine leichte Flüssigphase, einen zweiten Ablauf 15 für eine schwere Flüssigphase und einen Feststoffauslass 16 als Teil eines Feststoffentleerungssystems auf. Erkennbar ist der Separator 1 als Dreiphasenseparator ausgebildet.

Das nachfolgende Prinzip kann allerdings auch auf einen Zweiphasenseparator, z.B. einem Klärseparator, angewandt werden.

Der in Fig. 1 und 2 dargestellte Separator 1 weist am ersten und am zweiten Ablauf 14 und 15 der Flüssigphasen jeweils einen Drucksensor 23 und 24 auf. Diese Drucksensoren 23 und 24 ermöglichen typischerweise die Prozessüberwachung während des Abtrennens einer leichten und einer schweren Phase, wie z.B. der Reinigung von in Öl befindlichem Wasser.

Im Rahmen der vorliegenden Erfindung ist es allerdings mittels der vorgenannten Sensoren auch möglich ein Referenzvolumen und eine Leckage zu bestimmen.

Darüber hinaus weist der Separator 1 noch einen Steuerwasserzulauf 22 auf, welcher zur Steuerung des Feststoffaustrags bzw. der Feststoffentleerung, z.B. durch hydraulisch-betätigte Linearverschiebung eines Kolbenschiebers als Teil eines Feststoffentleerungssystems, vorgesehen ist. Dabei verzweigt ein Wassereinlauf 28 des Separators 1 in die beiden vorgenannten Wasserzuläufe 11 und 22. Wie bereits erwähnt, können die Zuläufe 11 und 22 aber auch getrennt zum Separator hingeführt werden. Eine Beschränkung auf die genannte Ausgestaltung besteht also nicht.

Die Zufuhr der Menge an Spülmedium in den ersten Spülmediumzulauf 11 wird durch eine Ventilanordnung 29, in Fig. 2 konkret durch Ventil 18 gesteuert. Dabei kann es sich vorzugsweise um Magnetventile handeln. Selbstverständlich können die zwei Ventile 17 und 18 auch in einem Mehrwegeventil zusammengefasst werden, so dass die Ventilanordnung 29 auch lediglich ein Ventil umfassen kann.

Die durch den Spülmediumzulauf 11 zugeführte Menge und/oder das zugeführte Volumen an Spülmedium wird durch ein entsprechendes Messgerät 19, vorzugsweise durch ein Durchflussmessgerät, ermittelt. Dieses kann insbesondere im Spülmediumzulauf 11 angeordnet sein.

Der zweite Ablauf 15 für die schwere Phase weist vorzugsweise ebenfalls ein Ventil 20, vorzugsweise ein Magnetventil, auf.

Die vom Messgerät 19 ermittelten Messwerte, ebenso wie die Messwerte der Drucksensoren 23 oder 24 können an eine Steuer- und/oder Auswerteeinheit 21 übermittelt werden, welche sodann die Steuerung der Ventile 17 und 18 für das Steuer- und Spülmedium und die Steuerung des Ventils 20 für die schwere Phase vornimmt.

Ziel der Messung der Durchflussmenge an Spülmedium und der damit verbundenen Ventilsteuerung ist die Ermittlung eines angepassten Referenzvolumens.

Das ermittelte Referenzvolumen kann mit dem vom Hersteller vorgegebenen initialen Referenzvolumen bzw. dem realen freien Volumen (z.B. aus der Geometrie berechnet oder in Versuchen ermittelt) verglichen werden. Das freie Trommelvolumen (technisches Trommelvolumen) ist vom Maschinentyp abhängig (Größe der Trommel, Anzahl und Abstände der Teller, usw.) und wird in der Maschinensteuerung hinterlegt. Aus dem Vergleich kann sodann zusätzlich der Verschmutzungsgrad der Trommel ermittelt werden.

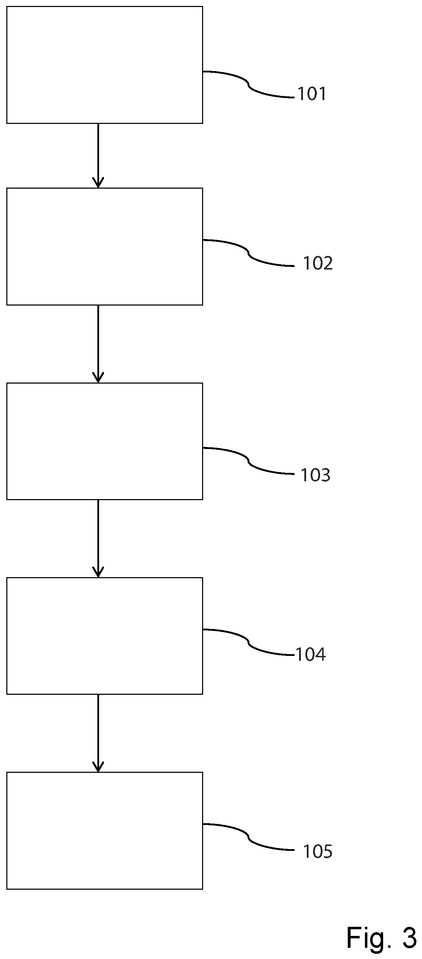

Die Bestimmung einer Leckage bedarf mehrerer Schritte, wie in Fig. 3 dargestellt.

Ein erster Schritt 101 ist das Bereitstellen eines Separators mit leerer Trommel und geschlossenen Zu- und Ablauf. Je nach Bauart steht für den Separator ein Anfangswert für ein Referenzvolumen oder ein Referenzdruck bei erstmaliger Befüllung der Trommel zur Verfügung.

Bei Inbetriebnahme kann eine erstmalige messtechnische Erfassung des Volumens der Trommel erfolgen. Hierzu wird nach dem Erreichen der Nenndrehzahl die Trommel in Schritt 102 so lange gefüllt, bis ein definierter Druckanstieg am Drucktransmitter in einer der jeweiligen Phase detektiert wird. Das Volumen wird in der Trommel als angepasstes Referenzvolumen abgespeichert. Zur Befüllung kann insbesondere Spülmedium eingesetzt werden. Das Befüllen der Trommel erfolgt durch Öffnen des Ventils 18 bis der Greifer 8 in das Wasser taucht und sich der Druck beim Drucksensor 24 erhöht. Derart erfolgt ein Ermitteln des Einfüllvolumens an Flüssigkeit zur Befüllung des Trommelvolumens durch das Messgerät 19, vorzugsweise einem Durchflussmessgerät, insbesondere einem MID.

Das ermittelte Trommelvolumen kann als angepasster Referenzwert gespeichert werden. Übersteigt dieser neu-ermittelte Referenzwert einen Grenzstand, beispielsweise 20% eines vorher gespeicherten Referenzwertes, also bei 20% Überfüllung der Trommel, sollte typischerweise ein Druckanstieg am Ablauf einer der Phasen, beim Drucksensor 24 beobachtet werden. Andernfalls wird eine Meldung zur Undichtigkeit der Trommel ausgegeben.

Sodann kann ein Dauerbetrieb des zentrifugalen Separators z.B. zur Verarbeitung eines Produktes durchgeführt werden. Im Dauerbetrieb kann die Trommel in einem dritten Schritt 103 nach einem vordefinierten Zeitintervall abermals vollständig oder teilweise entleert werden und es kann abermals die Messung durch Einleiten von Spülmedium, analog zu Schritt 102, erfolgen. Die Ermittlung des zulaufenden Volumens erfolgt durch das Durchflussmessgerät 19. Abermals kann das Referenzvolumen angepasst werden. Der Drucksensor detektiert einen Druckanstieg.

Schließlich erfolgt in einem vierten Schritt 104 ein Vergleich des Zulaufvolumens als Referenzwert gegen die laufende Messung mit dem Durchflusssensor 19. Erfolgt kein Druckanstieg nach dem Erreichen des angepassten Referenzwertes des Trommelvolumens, wird eine Meldung 105 bezüglich einer Undichtigkeit ausgegeben.

Wird z. B. bei Befüllung von beispielsweise 20% oberhalb des Referenzvolumens noch kein Druck angezeigt wird, dann sollte direkt ein Fehler angezeigt werden.

Wenn der Druck ansteigt, kann nach z. B. 5 Minuten erneut das Ventil 18 geöffnet werden und es wird geprüft, ob sofort ein Druckanstieg detektiert wird am Drucksensor 24. Ist das nicht der Fall, dann kann eine Warnung ausgeben werden "Trommeldichtung prüfen"

In regelmäßigen Abständen kann die Messung somit auch während des Betriebs des Separators ausgeführt. Hierzu wird entweder eine Totalentleerung ausgeführt oder mehrere Teilentleerungen. Danach kann eine Druckmessung starten wie zuvor beschrieben.

### Bezugszeichen

- 1: Separator
- 2: Trommel
- 3: Tellerpaket
- 4: Zulaufbereich
- 5: Verteilerbereich
- 6: Scheideteller
- 7: Greiferkammer leichte Phase
- 8: Greiferkammer schwere Phase
- 9: Ableitungsbereich
- 10: Produktzulauf
- 11: erster Spülmediumzulauf
- 12: Innenvolumen
- 13: Zulaufrohr
- 14: Erster Ablauf (leichte Phase)
- 15: Zweiter Ablauf (schwere Phase)
- 16: Feststoffauslass
- 17: Ventil
- 18: Ventil
- 19: Messgerät
- 20: Ventil
- 21: Steuer und/oder Auswerteeinheit
- 22: Steuerwasserzulauf
- 23: Drucksensor
- 24: Drucksensor
- 25: Umleitungsrohr
- 26: Feststoffsammelbereich
- 27: Separatorhaube
- 28: Wassereinlauf
- 29: Ventilanordnung
- 101: erster Schritt (Inbetriebnahme)
- 102: zweiter Schritt (erste Ermittlung eines Referenzvolumens)
- 103: dritter Schritt (Wiederholung im Betrieb)
- 104: vierter Schritt (Vergleich & Ausgabe)
- 105: Meldung

## Patentansprüche

1. Verfahren zur Überwachung einer Trommel eines zentrifugalen Separators (1) auf Leckage umfassend **die folgenden Schritte:**
A Bereitstellen des zentrifugalen Separators (1) umfassend eine entleerte Trommel und Bereitstellen eines Wertes für ein Referenzvolumen der Trommel (2);
B messtechnisches Erfassen eines zulaufenden Volumens bis zum Erreichen des Referenzvolumens der Trommel (2) durch ein Messgerät (19);
C messtechnisches Erfassen eines Drucks durch einen Drucksensor (24) im Ablauf einer Phase.
D Auswerten der zeitlichen Abfolge der Messwerte des Drucks nach Erreichen des Referenzvolumens unter Ermittlung eines Druckanstiegs und
E Ausgabe eines Signals, sofern der ermittelte Druckanstieg außerhalb eines Zeitintervalls nach Erreichen des Referenzvolumens erfolgt.

2. Verfahren nach Anspruch 1, **dadurch gekennzeichnet, dass** das Bereitstellen des Wertes für ein Referenzvolumen der Trommel (2), vorzugsweise bei Inbetriebnahme des Separators, nachfolgenden Schritten erfolgt:
I. Bereitstellen eines zentrifugalen Separators (1) mit einem vordefinierten Referenzvolumens in Abhängigkeit von seinen geometrischen Abmessungen;
II. Befüllung der Trommel (2) und Bestimmung des zur Befüllung der Trommel (2) notwendigen Volumens einer Flüssigkeit, welches dem aktuellvorhandenen freien Trommelvolumen der Trommel (2) entspricht, bis zum Erreichen eines Grenzstands.

3. Verfahren nach Anspruch 2, **dadurch gekennzeichnet, dass** der Grenzstand zur Anzeige der maximalen Befüllung der Trommel (2) anhand eines oder mehrerer Drucksensoren (23, 24) und/oder durch einen Grenzstandschalter im Ablauf einer Phase messtechnisch erfasst wird.

4. Verfahren nach einem der vorhergehenden Ansprüche, **dadurch gekennzeichnet, dass** der Drucksensor (23, 24) und/oder der Grenzstandschalter am Ablauf (15) der schwereren Flüssigphase des Separators (1) angeordnet ist.

5. Verfahren nach einem der vorhergehenden Ansprüche, **dadurch gekennzeichnet, dass** die zur Befüllung der Trommel eingeleitete Flüssigkeit Spülmedium ist, wobei ein Spülmediumzulauf (11) des Separators (1) zur Befüllung der Trommel (2) und ein Produktzulauf (10) des Separators (1) in ein gemeinsames Zulaufrohr (13) münden.

6. Verfahren nach einem der vorhergehenden Ansprüche, **dadurch gekennzeichnet, dass** die Bestimmung des zur Befüllung der Trommel (2) notwendigen Volumens durch ein Durchflussmessgerät (19) erfolgt.

7. Verfahren nach einem der vorhergehenden Ansprüche, **dadurch gekennzeichnet, dass** das Durchflussmessgerät (19) im oder am Produktzulauf (10) des Separators und/oder besonders bevorzugt im oder am Spülmediumzulauf (11) angeordnet ist.

8. Verfahren nach einem der vorhergehenden Ansprüche, **dadurch gekennzeichnet, dass** das Signal eine Ausgabe an einer Ausgabeeinheit, vorzugsweise eine Warnung, initiiert und/oder eine unmittelbare Aktion auf den Betrieb des Separators vornimmt, insbesondere eine Entleerung und/oder ein Abfahren des Separators einleitet.

9. Verfahren nach einem der vorhergehenden Ansprüche, **dadurch gekennzeichnet, dass** die Schritte A-E zumindest zweimal wiederholt werden, wobei in Schritt B eine Teil- oder Vollbefüllung nach einer Teil- oder Vollentleerung der Trommel erfolgen kann.

10. Verfahren nach einem der vorhergehenden Ansprüche, **dadurch gekennzeichnet, dass** zumindest das Durchführen der Schritte B-E, vorzugsweise des gesamten Verfahrens, bei rotierendem Separator erfolgt.

11. Verfahren nach einem der vorhergehenden Ansprüche, **dadurch gekennzeichnet, dass** durch Auswertung des Druckanstiegs und des zugeleiteten Volumens innerhalb eines Zeitintervalls der Umfang der Leckage ermittelt und ausgegeben wird.

12. Verfahren nach einem der vorhergehenden Ansprüche, **dadurch gekennzeichnet, dass** die das gesamte Verfahren ohne Demontage des Separators, insbesondere der Trommel, durchgeführt wird.

## Claims

1. Method for monitoring a drum of a centrifugal separator (1) for leakage, **comprising by the following steps of:**
A providing the centrifugal separator (1) comprising an emptied drum and providing a value for a reference volume of the drum (2);
B measuring, by means of a measuring device (19), an inflowing volume at least until the reference volume of the drum (2) is reached;
C measuring a pressure by means of a pressure sensor (24) in the outlet of a phase.
D evaluating the temporal sequence of the measured values of the pressure after the reference volume has been reached, and thus determining a pressure rise, and
E outputting a signal if the determined pressure rise occurs outside of a time interval after the reference volume has been reached.

2. Method according to claim 1, **characterized in that** the provision of the value for a reference volume of the drum (2), preferably during commissioning of the separator, takes place in the following steps of:
I. providing a centrifugal separator (1) with a predefined reference volume depending on its geometric dimensions;
II. filling the drum (2) and determining the volume of liquid required to fill the drum (2), which corresponds to the currently available free drum volume of the drum (2), until a limit level is reached.

3. Method according to claim 2, **characterized in that** the limit level for indicating the maximum filling of the drum (2) is detected by measurement by means of one or more pressure sensors (23, 24) and/or by a limit level switch in the outlet of a phase.

4. Method according to one of the preceding claims, **characterized in that** the pressure sensor (23, 24) and/or the limit level switch is arranged at the outlet (15) of the heavier liquid phase of the separator (1).

5. Method according to one of the preceding claims, **characterized in that** the liquid introduced for filling the drum is flushing medium, wherein a flushing medium inlet (11) of the separator (1) for filling the drum (2) and a product inlet (10) of the separator (1) open into a common inlet pipe (13).

6. Method according to one of the preceding claims, **characterized in that** the volume required to fill the drum (2) is determined by a flow meter (19).

7. Method according to one of the preceding claims, **characterized in that** the flow meter (19) is arranged in or at the product inlet (10) of the separator and/or particularly preferably in or at the flushing medium inlet (11).

8. Method according to one of the preceding claims, **characterized in that** the signal initiates an output at an output unit, preferably a warning, and/or performs an immediate action on the operation of the separator, in particular initiates emptying and/or a shutdown of the separator.

9. Method according to one of the preceding claims, **characterized in that** steps A-E are repeated at least twice, wherein in step B a partial or complete filling can take place after a partial or complete emptying of the drum.

10. Method according to one of the preceding claims, **characterized in that** at least steps B-E, preferably the entire method, are carried out while the separator is rotating.

11. Method according to one of the preceding claims, **characterized in that** the extent of the leakage is determined and output by evaluating the pressure rise and the volume supplied within a time interval.

12. Method according to one of the preceding claims, **characterized in that** the entire method is carried out without dismantling the separator, in particular the drum.

## Revendications

1. Procédé pour la surveillance de fuites sur un tambour d'un séparateur centrifuge (1), comprenant les étapes suivantes :
A mise à disposition du séparateur centrifuge (1), comprenant la vidange du tambour et la mise à disposition d'une valeur pour un volume de référence du tambour (2) ;
B acquisition métrologique d'un volume entrant jusqu'à ce que le volume de référence du tambour (2) soit atteint par un appareil de mesure (19) ;
C acquisition métrologique d'une pression par un capteur de pression (24) au terme d'une phase ;
D analyse de la succession dans le temps des valeurs de mesure de la pression après que le volume de référence a été atteint avec détermination d'une élévation de la pression et
E émission d'un signal si l'élévation de la pression déterminée a lieu pendant un intervalle de temps suivant la constitution du volume de référence.

2. Procédé selon la revendication 1, **caractérisé en ce que** la mise à disposition de la valeur pour un volume de référence du tambour (2) est effectuée, de préférence lors de la mise en service du séparateur, selon les étapes suivantes :
I. mise à disposition d'un séparateur centrifuge (1) ayant un volume de référence prédéfini en fonction de ses dimensions géométriques ;
II. remplissage du tambour (2) et détermination du volume d'un liquide nécessaire au remplissage du tambour (2), qui correspond au volume de tambour libre du tambour (2) actuellement disponible, jusqu'à ce qu'un niveau limite soit atteint.

3. Procédé selon la revendication 2, **caractérisé en ce que** le niveau limite pour indiquer le remplissage maximal du tambour (2) est acquis de façon métrologique à la fin d'une phase à l'aide d'un ou plusieurs capteurs de pression (23, 24) et/ou par un détecteur de seuil de niveau.

4. Procédé selon l'une des revendications précédentes, **caractérisé en ce que** le capteur de pression (23, 24) et/ou le détecteur de seuil de niveau sont disposés sur l'évacuation (15) de la phase liquide lourde du séparateur (1).

5. Procédé selon l'une des revendications précédentes, **caractérisé en ce que** le liquide introduit pour remplir le tambour est un liquide de rinçage, avec une arrivée de liquide de rinçage (11) du séparateur (1) pour le remplissage du tambour (2) et une arrivée de produit (10) du séparateur (1) qui débouchent dans un tuyau d'arrivée (13) commun.

6. Procédé selon l'une des revendications précédentes, **caractérisé en ce que** le volume nécessaire pour remplir le tambour (2) est déterminé par un débitmètre (19).

7. Procédé selon l'une des revendications précédentes, **caractérisé en ce que** le débitmètre (19) est disposé dans ou sur l'arrivée de produit (10) du séparateur et/ou de préférence, en particulier, dans ou sur l'arrivée de liquide de rinçage (11).

8. Procédé selon l'une des revendications précédentes, **caractérisé en ce que** le signal déclenche une sortie sur une unité de sortie, de préférence une alerte, et/ou réalise une action immédiate sur le fonctionnement du séparateur, en particulier lance une vidange et/ou un arrêt du séparateur.

9. Procédé selon l'une des revendications précédentes, **caractérisé en ce que** les étapes A-E sont répétées au moins deux fois, un remplissage partiel ou complet pouvant avoir lieu dans l'étape B après une vidange partielle ou complète du tambour.

10. Procédé selon l'une des revendications précédentes, **caractérisé en ce que** les étapes B-E au moins, de préférence toute la procédure, sont exécutées pendant que le séparateur est en rotation.

11. Procédé selon l'une des revendications précédentes, **caractérisé en ce que** l'analyse de l'augmentation de la pression et du volume amené dans un intervalle de temps permet de déterminer et d'émettre en sortie l'importance de la fuite.

12. Procédé selon l'une des revendications précédentes, **caractérisé en ce que** l'ensemble du procédé est exécuté sans démontage du séparateur, en particulier du tambour.
